Europäisches Patentamt

European Patent Office

Office européen des brevets

(11) Veröffentlichungsnummer: **0 186 781**
**A1**

(12) # EUROPÄISCHE PATENTANMELDUNG

(21) Anmeldenummer: 85114927.8

(22) Anmeldetag: 25.11.85

(51) Int. Cl.⁴: **A 01 N 59/00,** C 01 B 15/037

(30) Priorität: 03.12.84 DE 3444055

(43) Veröffentlichungstag der Anmeldung: 09.07.86
Patentblatt 86/28

(84) Benannte Vertragsstaaten: **AT BE CH DE FR GB IT LI NL**

(71) Anmelder: **Henkel Kommanditgesellschaft auf Aktien,
Postfach 1100 Henkelstrasse 67,
D-4000 Düsseldorf-Holthausen (DE)**

(72) Erfinder: **Schindler, Norbert, Dr., Am Merxhof 12,
D-4018 Langenfeld (DE)**
Erfinder: **Disch, Karlheinz, Dr., Holbeinstrasse 10,
D-5657 Haan (DE)**
Erfinder: **Bansemir, Klaus, Dr., Ursulaweg 51,
D-4018 Langenfeld (DE)**

(54) **Stabilisierte Desinfektionsmittelkonzentrate.**

(57) Zur Stabilisierung und/oder zur Steigerung der mikrobiziden Wirkung von wäßrigen $H_2O_2$-Lösungen werden Hexafluorkieselsäure und/oder deren wasserlösliche Salze
eingesetzt. Mikrobizide Wirkstoffgemische auf Basis von
sauer eingestellten wäßrigen $H_2O_2$ mit einem Gehalt an
Komplexbildnern und gewünschtenfalls weiteren desinfizierenden Mitteln enthalten zusätzlich Hexafluorkieselsäure
und/oder deren wasserlösliche Salze.

EP 0 186 781 A1

4000 Düsseldorf , 29. November 1984
Henkelstraße 67            — 1 —

HENKEL KGaA
ZR-FE/Patente
HF/Ne

P a t e n t a n m e l d u n g

D 7176

"Stabilisierte Desinfektionsmittelkonzentrate"

Bei der in der Praxis durchgeführten Flächendesinfektion beispielsweise im Bereich der Krankenhäuser, Schulen, Badeanstalten, öffentlichen Verkehrsmittel oder auch in gewerblichen Betrieben wie Schlachthöfen, Molkereien, Brauereien und Wäschereien stehen nach wie vor Aldehyde oder Phenole enthaltende Zusammensetzungen im Vordergrund. Diese Mittel gewährleisten bei Einsatz hinreichender Mengen eine rasche und breite antimikrobielle Wirkung. Nachteilig ist, daß ihre Wirkstoffe auch für höhere Lebewesen toxisch sind und ihre Anwendung mit lange andauernder Geruchsbelästigung verbunden ist.

Die desinfizierende Wirkung von wäßrigen Wasserstoffperoxidlösungen ist bekannt. Wasserstoffperoxid wäre an sich ein ideales Desinfektionsmittel. Es vergiftet die schädlichen Mikroorganismen nicht, sondern zerstört sie oxidativ. Nach Gebrauch zerfällt es in relativ kurzer Zeit in Wasser und Sauerstoff.

Wäßrige Wasserstoffperoxidlösungen neigen jedoch bekanntlich zur Zersetzung, abhängig von Temperatur, pH-Wert und anderen vorliegenden Substanzen. Während die Stabilisierung alkalischer Lösungen über einen längeren Zeitraum praktisch nicht gelingt, sind sauer eingestellte Wasserstoffperoxidlösungen bestimmter Zusammensetzung

...

besser stabilisierbar. Zur sauren Stabilisierung sind allerdings nur gewisse Säuren bzw. saure Salze geeignet, insbesondere solche, die keine Persäuren bilden. Weiterhin stabilisierend wirken geeignete Zusätze von Komplexbildnern. Im sauren Bereich verliert allerdings das Wasserstoffperoxid einen Teil seiner desinfizierenden Wirkung, andererseits erlauben solche sauer stabilisierten Wasserstoffperoxidlösungen den Zusatz anderer desinfizierender Komponenten, z. B. quartäre Ammoniumverbindungen, so daß die Kombination von Wasserstoffperoxid mit diesen Zusätzen zu wirksamen Desinfektionslösungen führen kann. Gegenstand der DE-OS 32 05 318 sind flüssige Konzentrate zur Verwendung als Desinfektionsmittel auf Basis von Wasserstoffperoxid, die dadurch gekennzeichnet sind, daß sie 1 bis 15 Gew.-% Wasserstoffperoxid, 1 bis 30 Gew.-% saure Phosphorverbindungen, insbesondere Phosphorsäure oder saure Alkali- und/oder Ammoniumphosphate, 0,1 bis 5 Gew.-% an Komplexbildnern und gewünschtenfalls bis zu 20 Gew.-% Tenside in wäßrigem System enthalten. Aufgabe der vorliegenden Erfindung ist die weitere Verbesserung solcher Desinfektionsmittel auf Basis sauer eingestellter Wasserstoffperoxidlösungen. Die erfindungsgemäße Lehre geht von der überraschenden Feststellung aus, daß die Mitverwendung bestimmter, in wäßriger Lösung insbesondere sauer reagierender Mischungskomponenten sowohl die Lagerstabilität als auch die mikrobiologische Wirksamkeit von Wasserstoffperoxidlösungen der angegebenen Art beträchtlich steigern kann.

Gegenstand der Erfindung ist dementsprechend in einer ersten Ausführungsform die Verwendung von Hexafluorkieselsäure und/oder ihren wasserlöslichen Salzen zur Stabilisierung und/oder zur mikrobiziden Wirkungssteigerung von wäßrigen $H_2O_2$-Lösungen. Die Erfindung be-

...

trifft weiterhin insbesondere mikrobizide Wirkstoffgemische auf Basis einer sauer eingestellten wäßrigen
$H_2O_2$-Lösung mit einem Gehalt an Komplexbildnern und
gewünschtenfalls weiteren Mitteln mit desinfizierender
Wirkung, wobei diese Wirkstoffgemische dadurch gekennzeichnet sind, daß sie zusätzlich Hexafluorkieselsäure
und/oder ihre wasserlöslichen Salze enthalten.

Der Zusatz von Hexafluorkieselsäure $H_2SiF_6$ und/oder
ihrer wasserlöslichen Salze führten im wäßrig sauren
Bereich in Wirkstoffmischungen der beispielsweise in der
DE-OS 32 05 318 beschriebenen Art zu einer bisher nicht
bekannten Stabilisierung des Wasserstoffperoxids und
damit zu einer beträchtlichen Verlängerung der Lebens-
und Gebrauchsdauer solcher Desinfektionsmittel bzw. Desinfektionsmittelkonzentrate im praktischen Einsatz. In
einer bevorzugten Ausführungsform der Erfindung werden
dabei die Hexafluorsilikatverbindungen als wesentliche
oder als ausschließliche Komponenten zur sauren Unterlegung des Wirkstoffgemisches eingesetzt. Es ist allerdings auch möglich, neben den Hexafluorsilikatverbindungen in an sich bekannter Weise Phosphorsäure bzw. saure
Phosphorverbindungen mit zu verwenden.

Die geeigneten wasserlöslichen Salze der Hexafluorkieselsäure sind insbesondere solche der ersten, der zweiten
und/oder der dritten Gruppe, insbesondere Hauptgruppe
des Periodischen Systems, wobei besondere Bedeutung die
Natrium-, Kalium- und/oder Aluminiumhexafluorsilikate,
insbesondere aber das Magnesiumhexafluorosilikat,
besitzen. Neben oder anstelle dieser Salze mit metallischen Kationen können aber auch das entsprechende
Ammoniumsalz und/oder Hexafluorosilikate organischer
Kationen in Betracht kommen. Geeignet sind also auch die
entsprechenden Amin- und/oder quartären Ammoniumsalze.

...

In einer bevorzugten Ausführungsform betrifft die Erfindung wasserverdünnbare Konzentrate, die in wäßriger oder wäßrig/organischer Lösung Wasserstoffperoxid, bekannte Komplexbildner zur Stabilisierung des Wasserstoffperoxids gegenüber Schwermetallionen und Hexafluorkieselsäure bzw. ihre wasserlöslichen Salze enthalten. Gewünschtenfalls liegen daneben andere Komponenten mit Desinfektionswirkung, insbesondere bakterizid und/oder fungizid wirksame Komponenten vor. Auch die Mitverwendung von Tensiden im Wirkstoffgemisch kann vorgesehen sein. In einer bevorzugten Ausführungsform enthalten solche zur Verdünnung bestimmten wäßrigen Wirkstoffkonzentrate 1 bis 15 Gew.-% $H_2O_2$, 0,1 bis 20 Gew.-% der Hexafluorkieselsäure und/oder ihrer Salze, 0,1 bis 5 Gew.-% an gegenüber Schwermetallionen wirksamen Komplexbildnern sowie gewünschtenfalls bis zu 15, vorzugsweise bis zu 10 Gew.-%, andere mikrobizid wirksame Komponenten, bis zu etwa 20 Gew.-% Tenside und - sofern erwünscht - ebenfalls bis zu etwa 20 Gew.-% Phosphorsäure und/oder saure Phosphorverbindungen. Zweckmäßigerweise liegen die Gewichtsverhältnisse von $H_2O_2$ zur Hexafluorkieselsäure und/oder ihren Salzen im Bereich von etwa 100 : 1 bis 1 : 20, wobei Mischungsverhältnisse im Bereich von etwa 50 : 1 bis 1 : 10 besonders bevorzugt sein können.

Zur Stabilisierung des Wasserstoffperoxids enthält das erfindungsgemäße Konzentrat einen gegenüber Schwermetallionen wirksamen Komplexbildner. Für diesen Zweck besonders geeignete Komplexbildner sind Alkanpolyphosphonsäuren, Amino- und Hydroxyalkanpolyphosphonsäuren und Phosphonocarbonsäuren, beispielsweise Methandiphosphonsäure, 1-Aminoethan-1,1-diphosphonsäure, Aminotri-(methylenphosphonsäure), Ethylendiamintetra-(methylenphosphonsäure), Hydroxyethan-1,1-diphosphonsäure und

. . .

2-Phosphonobutan-1,2,4-tricarbonsäure oder Aminopolycarbonsäuren wie z. B. Nitrilotriessigsäure, Ethylendiamintetraessigsäure oder Hydroxyethylethylendiamintriessigsäure sowie die Alkalisalze der genannten Säuren.

In einer bevorzugten Auführungsform enthalten die
erfindungsgemäßen Konzentrate zusätzlich 0,5 bis 10
Gew.-% desinfizierend wirkende quartäre Ammoniumverbindungen, insbesondere solche, die neben einem langkettigen aliphatischen und zwei kurzkettigen aliphatischen Kohlenwasserstoffresten einen aromatischen, über
ein aliphatisches Kohlenstoffatom mit dem Stickstoffatom
verknüpften, oder einen aliphatischen, Doppelbindungen
aufweisenden Kohlenwasserstoffrest im Molekül enthalten.
Beispiele für derartige antimikrobielle quartäre Ammoniumverbindungen sind Dimethylbenzyl-dodecyl-ammoniumchlorid, Dimethyl-benzyl-tetradecylammoniumchlorid, Dime-
thyl-(ethylbenzyl)-dodecylammoniumchlorid, Dimethyl-ben-
zyl-decylammoniumbromid, Dimethyl-benzyl-octylammoniumchlorid, Methyl-ethyl-benzyl-dodecylammoniumchlorid,
Dibutyl-allyldodecylammoniumchlorid, Ethyl-cyclohexylallyl-dodecylammoniumchlorid, Ethyl-crotyl-(diethylaminoethyl)-dodecylammoniumchlorid und insbesondere Kokosalkyl-dimethyl-benzylammoniumchlorid, in dem sich der
Kokosalkylrest von dem hydrierten Fettsäuregemisch des
Kokosöls ableitet. Dimethyldidecylammoniumchlorid ist
ebenfalls wirksam.

Zusätzlich können enthalten sein mikrobizid wirksame
Amphotenside wie Dodecyldi-(aminoethyl)-glycinhydrochlo-
rid oder andere, höhermolekulare, mikrobizid wirksame
Stickstoffverbindungen.

Wenn neben der antimikrobiellen Wirkung eine zusätzliche
Reinigungswirkung erwünscht ist, können die Mittel

...

nichtionische Tenside oder Amphotenside enthalten. Als nichtionische Tenside kommen Anlagerungsprodukte von 4 bis 40, vorzugsweise 4 bis 20 Mol Ethylenoxid an 1 Mol Fettalkohol, Alkylcyclohexanol, Alkylphenol, Fettsäure, Fettamin, Fettsäureamid oder Alkansulfonamid in Betracht. Von besonderem Interesse sind Anlagerungsprodukte von 5 bis 16 Mol Ethylenoxid an Kokos- oder Talgfettalkohole, an Oleylalkohol und an Mono-, Di- oder Trialkylphenole sowie an Monoalkylcyclohexanole mit 6 bis 14 Kohlenstoffatomen in den Alkylresten. Als Amphotenside kommen die Derivate von sekundären oder tertiären aliphatischen Aminen in Frage, wobei die aliphatischen Reste geradkettig oder verzweigt sein können und ein Rest 8 bis 18 Kohlenstoffatome und ein anderer eine löslichmachende anionische Gruppe, beispielsweise eine Carboxy-, Sulfo-, Sulfato-, Phosphato- oder Phosphonogruppe enthält.

Als Lösungsmittel für die flüssigen Konzentrate dienen Wasser und Gemische aus Wasser und solchen organischen Lösungsmitteln, die mit Wasser mischbar sind, inbesondere niedere Alkohole wie Methanol, Ethanol, Propanol und Isopropanol.

Wird die Mitverwendung von weiteren sauren Komponenten gewünscht, so kommen vor allem saure Phosphorverbindungen, insbesondere Orthophosphorsäure und saure Salze der Orthophosphorsäure wie Natriumdihydrogenphosphat, Kaliumdihydrogenphosphat und Ammoniumdihydrogenphosphat in Betracht.

Neben den genannten Komponenten können die erfindungsgemäßen Konzentrate weitere, in flüssigen Desinfektionsmitteln übliche Bestandteile enthalten, beispielsweise Farb- und Duftstoffe.

...

Für die Verwendung in der Desinfektion, insbesondere in der Flächendesinfektion werden die erfindungsgemäßen Konzentrate mit Wasser zur Lösung verdünnt, die 0,1 bis 5 Gew.-% Konzentrat, insbesondere 0,5 bis 3 Gew.-% Konzentrat enthalten.

Die erfindungsgemäßen Konzentrate zeichnen sich - insbesondere beim alleinigen Einsatz von Hexafluorkieselsäureverbindungen zur sauren Unterlegung - durch eine ungewöhnlich hohe Lagerstabilität aus. So beträgt beispielsweise der Wasserstoffperoxiderhaltungsgrad der Wirkstoffmischung nach Beispiel 2 nach einer Lagerung von 12 Wochen bei 40 °C noch 92 %. Darüber hinaus zeigen Desinfektionslösungen, die aus den erfindungsgemäßen Konzentraten hergestellt worden sind, verstärkte mikrobizide Wirkungen. Sie eignen sich damit zur verbesserten Desinfektion, beispielsweise in den eingangs genannten Anwendungsbereichen.

...

## Beispiel 1

Durch Vermischen der einzelnen Komponenten werden die in der nachfolgenden Tabelle 1 aufgelisteten Wirkstoffmischungen A, B und C hergestellt. Das Wirkstoffgemisch C entspricht der Erfindung, die Mischung B fällt in die Offenbarung der DE-OS 32 05 318, die Wirkstoffmischung A ist mit der erfindungsgemäßen Mischung C vergleichbar, hier fehlt jedoch der Zusatz der Hexafluorsilikatverbindung.

Die Prüfung der mikrobiologischen Wirksamkeit erfolgte unter anderem im quantitativen Suspensionstest der DGHM (Deutsche Gesellschaft für Hygiene und Mikrobiologie), beschrieben im Zentralblatt 1. Abt. Vol B 172 (1981), Seiten 534 bis 562.

Da QAV-Präparate meist eine Wirkungslücke gegen gram-negative Keime aufweisen, wurde als Testkeim der sehr widerstandsfähige, pathogene gram-negative Keim Pseudomonas aeruginosa genommen.

In der nachfolgenden Tabelle sind die mikrobiologischen Ergebnisse aufgeführt:

...

Tabelle 1

|  | A | | B | | C | |
|---|---|---|---|---|---|---|
| Benzyl-dimethyl-$C_{12}$-$C_{14}$-alkylammoniumchlorid | 5 | Gew.-% | 5 | Gew.-% | 5 | Gew.-% |
| Wasserstoffperoxid | 5 | " | 5 | " | 5 | " |
| Phosphorsäure | - | | 5 | | - | |
| Magnesiumhexafluorosilikat | - | | - | | 5 | " |
| Hydroxyethyl-diphosphonsäure | 0,6 | " | 0,6 | " | 0,6 | " |
| Wasser | Rest | | Rest | | Rest | |

Suspensionstest gemäß DGHM
gegen pseudom. aerug.

| | A | B | C |
|---|---|---|---|
| ohne Eiweißbelastung | 1%/5 min./6.7[*] | 1%/5 min./6,8[*] | 0,25%/5 min./6,8[*] |
| mit Eiweißbelastung | 1%/30 min./5,5[*] | 1%/5 min./6,7[*] | 0,25%/30 min./6,8[*] |

Keimträgertest gemäß DGHM
gegen pseud. aerug.

| | A | C |
|---|---|---|
| | 3%/ 120 min. | 3%/30 min. |
| | 2%/ 120 min. | 2%/60 min. |
| | 1%/ 120 min. | 1%/120 min. |

Anmerkung: der pH-Wert der Anwendungslösungen lag bei 3 bis 3,3

[*] = Reduktionsfaktor

Patentanmeldung    D 7176    - 9 -

0186781
HENKEL KGaA
ZR-FE/Patente

Aus der Tabelle ist ersichtlich, daß der Zusatz von Magnesiumhexafluorosilikat zu A bzw. der Ersatz von Phosphorsäure in B durch Magnesiumhexafluorosilikat eine signifikante Steigerung der mikrobiziden Wirksamkeit der Mischung C bringt.

Wie sehr der Zusatz von Magnesiumhexafluorosilikat zu Wasserstoffperoxid/quartäre Ammoniumverbindung die mikrobiologische Wirksamkeit steigern kann, ist auch aus dem sogenannten Keimträgertest an demselben Keim pseudomonas aeruginosa zu erkennen (siehe Tabelle).

Beispiel 2

    5 Gew.-%  $H_2O_2$

0,6 Gew.-%  1-Hydroxyethan-1,1-diphosphonsäure

 15 Gew.-%  Magnesiumhexafluorosilikat

7,5 Gew.-%  handelsübliches Alkyl-benzyldimethylammoniumchlorid (durchschnittliche Kettenlänge des Alkylrestes = $C_{14}$)

71,9 Gew.-% Wasser

Die ungewöhnlich hohe Lagerstabilität einer solchen Mischung ist aus folgenden Werten erkennbar: Wasserstoffperoxiderhaltungsgrad nach 12 Wochen bei 40 °C = 92 %.

Beispiel 3

5    Gew.-% Magnesiumhexafluorosilikat

5    Gew.-% Wasserstoffperoxid

0,1  Gew.-% Ethylendiamintetra(methylenphosphonsäure)

5    Gew.-% Dichlorbenzyldimethyl-$C_{12}$-$C_{18}$-alkyl-ammonichlorid

84,9 Gew.-% Wasser

...

Das Wirkstoffkonzentrat besitzt eine ausgezeichnete
Lagerstabilität, die der des Beispiels 2 vergleichbar
ist.

Beispiel 4

10     Gew.-% Wasserstoffperoxid
 2     Gew.-% 1-Hydroxyethan-1,1-diphosphonsäure
 5     Gew.-% Magnesiumhexafluorosilikat
 5     Gew.-% Dinatriumhydrogenphosphat
7,5    Gew.-% Dimethyl-didecylammoniumchlorid
71,5 Gew.-% Wasser

Es liegt ein Wirkstoffgemisch mit guter Lagerstabilität
vor.

Beispiel 5

12     Gew.-% Anlagerungsprodukt von 10 Mol Ethylenoxid an
       1 Mol $C_{10}$-$C_{12}$-Fettalkohol
0,5    Gew.-% Dinatriumhexafluorosilikat
 3     Gew.-% Natriumdihydrogenphosphat
 2     Gew.-% Ethylendiamintetraacetat
10     Gew.-% Alkyl-benzyl-dimethylammoniumchlorid (Alkyl
       durchschnittlich $C_{14}$)
 4     Gew.-% Wasserstoffperoxid
10     Gew.-% Isopropanol
62,9 Gew.-% Wasser

Beispiel 6

 3     Gew.-% Anlagerungsprodukt von 6 Mol Ethylenoxid an
       Nonylphenol
 5     Gew.-% Magnesiumhexafluorosilikat

...

3    Gew.-% Orthophosphorsäure

1    Gew.-% Wasserstoffperoxid

0,1    Gew.-% 1-Hydroxyethan-1,1-diphosphonsäure

2    Gew.-% Dodecyldi-(aminoethyl)-glycin-hydrochlorid

3    Gew.-% Alkyl-benzyl-dimethylammoniumchlorid
     (Alkyl durchschnittlich $C_{14}$)

82,9 Gew.-% Wasser

## Beispiel 7

1    Gew.-% Nonylphenol mit 2 Ethylenoxid

1    Gew.-% Nonylphenol mit 5 Ethylenoxid

2    Gew.-% Tetramethylammoniumhexafluorosilikat

3    Gew.-% Phosphorsäure

1    Gew.-% Phosphonobutantricarbonsäure

8    Gew.-% Wasserstoffperoxid

5    Gew.-% Alkyl-benzyl-dimethylammoniumchlorid
     (Alkyl durchschnittlich $C_{14}$)

4    Gew.-% Ethanol

75    Gew.-% Wasser

Auch die Wirkstoffmischungen gemäß Beispielen 5, 6 und 7 stellen hochwirksame und lagerstabile Stoffgemische dar.

...

<u>P a t e n t a n s p r ü c h e</u>

1. Verwendung von Hexafluorkieselsäure und/oder ihren wasserlöslichen Salzen zur Stabilisierung und/oder mikrobiziden Wirkungssteigerung von wäßrigen $H_2O_2$-Lösungen.

2. Mikrobizide Wirkstoffgemische auf Basis einer sauer eingestellten wäßrigen $H_2O_2$-Lösung mit einem Gehalt an Komplexbildnern und gewünschtenfalls weiteren desinfizierenden Mitteln, dadurch gekennzeichnet, daß sie zusätzlich Hexafluorkieselsäure und/oder ihre wasserlöslichen Salze enthalten.

3. Mikrobizide Wirkstoffgemische nach Anspruch 2, dadurch gekennzeichnet, daß sie Gewichtsverhältnisse von $H_2O_2$ : Hexafluorkieselsäure bzw. ihren Salzen im Bereich von 100 : 1 bis 1 : 20, vorzugsweise im Bereich von 50 : 1 bis 1 : 10 aufweisen.

4. Mikrobizide Wirkstoffgemische nach den Ansprüchen 2 und 3, dadurch gekennzeichnet, daß sie als wasserverdünnbare Konzentrate vorliegen, die insbesondere 1 bis 15 Gewichtsprozent $H_2O_2$, 0,1 bis 20 Gew.-% Hexafluorkieselsäure bzw. ihre Salze, 0,1 bis 5 Gew.-% Komplexbildner, 0,5 bis 10 Gew.-% bakterizidwirksame quartäre Ammoniumverbindungen und/oder andere bakterizid wirksame Komponenten, 0 bis 20 Gew.-% Phosphorsäure und/oder saure Phosphorverbindungen, insbesondere entsprechende Salze, sowie 0 bis 20 Gew.-% Tenside in wäßriger Lösung oder in einem mit Wasser mischbaren Lösungsmittelsystem enthalten.

...

5. Mikrobizide Wirkstoffgemische nach den Ansprüchen 2 bis 4, dadurch gekennzeichnet, daß sie als Salze der Hexafluorkieselsäure solche mit Metallen der ersten bis dritten Gruppe des Periodischen Systems bzw. Amin-, Ammonium-und/oder quartäre Ammoniumsalze enthalten.

6. Mikrobizide Wirkstoffgemische nach Anspruch 5, dadurch gekennzeichnet, daß sie Magnesiumhexafluorsilikat enthalten.

7. Mikrobizide Wirkstoffgemische nach den Ansprüchen 2 bis 6, dadurch gekennzeichnet, daß sie als Komplexbildner mindestens eine Verbindung aus der Gruppe Alkanpolyphosphonsäuren, Aminopolyphosphonsäuren, Hydroxyalkanpolyphosphonsäuren, Phosphonocarbonsäuren, Aminopolycarbonsäuren und deren Alkalimetallsalze enthalten.

8. Mikrobizide Wirkstoffgemische nach den Ansprüchen 2 bis 7, dadurch gekennzeichnet, daß sie nichtionische Tenside und/oder Amphotenside enthalten.

# 0186781

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 085 862 (SAPIC) <br> * Ansprüche * <br><br> --- | 1-8 | A 01 N 59/00 <br> C 01 B 15/037 |
| X | US-A-3 687 627 (N.J. STALTER) <br> * Spalte 1, Zeilen 13-21; Spalte 4, Zeilen 35-45 * <br><br> --- | 1-8 | |
| A | EP-A-0 087 049 (HENKEL) <br><br> * Ansprüche * & DE - A - 3 205 318 (Kat. D) <br><br> ----- | 2,4,7, 8 | |

|  |  |
|---|---|
|  | RECHERCHIERTE SACHGEBIETE (Int. Cl.4) |
|  | A 01 N <br> C 01 B |

Der vorliegende Recherchenbericht wurde für alle Patentansprüche erstellt.

| Recherchenort | Abschlußdatum der Recherche | Prüfer |
|---|---|---|
| DEN HAAG | 18-03-1986 | DECORTE D. |